# EUROPEAN PATENT SPECIFICATION

(11) **EP 0 840 555 B1**
(45) Date of publication and mention of the grant of the patent: **24.10.2001**
(21) Application number: 96922158.9
(22) Date of filing: 05.07.1996
(51) Int. Cl.: A23L 1/22, A24B 15/28

(54) **STABILISATION OF FLAVOURANTS**
STABILISIERUNG VON GESCHMACKSSTOFFEN
STABILISATION D'AGENTS AROMATISANTS

(30) Priority: 07.07.1995 GB 9513951
(43) Date of publication of application: 13.05.1998
(73) Proprietor: British American Tobacco (Investments) Limited, London WC2R 3LA (GB)
(72) Inventor: O'REILLY, Rosemary, Elizabeth, Eastleigh SO53 3HB (GB)
(74) Representative: MacLean, Kenneth John Hamson
(86) International application number: GB9601609
(87) International publication number: WO9702759

(56) References cited:
- EP-A- 0 357 284
- EP-A- 0 464 324
- EP-A- 0 503 795
- WO-A-94/02030
- GB-A- 1 163 023
- US-A- 5 264 223

## Description

The present invention relates to the stabilisation of flavourants.

In the flavour industry it is commonly known that some flavourants are too volatile or odorous to be used directly on, for example, foodstuff products. One way of overcoming this problem is to encapsulate the flavour molecules to restrain the volatile nature thereof.

A method of encapsulating flavourants at the molecular level involves the use of β-cyclodextrin as the encapsulating agent. See, for example, European Patent Application No. 0 503 795-A2. The method of encapsulating flavourants using β-cyclodextrin may proceed under a variety of process conditions, the following being an example of such a method. A solution of β-cyclodextrin is heated to around 80°C, whereupon the β-cyclodextrin molecules break open. The flavourant is then added to the warm solution and the resultant mixture is left to cool. As the mixture cools opened β-cyclodextrin rings re-form around the flavour molecules. Hence, at lease one flavour molecule is stabilised within the β-cyclodextrin ring.

A problem with the β-cyclodextrin method of encapsulation is that due to the size of the internal cavity of the β-cyclodextrin ring only a limited number of flavour molecules can be stabilised (encapsulated) per β-cyclodextrin ring. In most cases only one flavour molecule can be stabilised per β-cyclodextrin ring. Therefore, the loading level of flavourant in unit amount of β-cyclodextrin is limited. In addition, if the flavourant is a mixture of different flavour molecules, the β-cyclodextrin may selectively encapsulate a certain type(s) of the flavour molecules in preference to others, and so unbalance a mixed flavour composition.

WO 94/02030 discloses an edible gel composition for use in a flexible container, such that when the container is squeezed the composition is extruded through a discharge opening therein. The composition includes a gel medium comprising water, carageenan, locust bean gum and a potentiator for the carageenan, in which gel medium is uniformly dispersed and suspended a flavouring system including fruit pieces or fruit juice, a sweetening agent, a food grade acid and xanthan gum. To form the gel, cooling below the gel point temperature is effected.

It is taught in GB 1, 163,023 that flavour molecules may be stabilised by forming a wall of material around the flavour molecules. In this case, a mixture of reactants including a carageenate compound, produce a capsule wall around the flavour molecules.

EP 0 464 324 discloses a flavouring granule of relatively large diameter suitable for insertion into the filter tip of a cigarette, which granule is physically crushed at the time of smoking. The method disclosed in EP 0 464 324 is concerned with the preparation of flavouring granules of large size. The method includes a step for ensuring that the granules are perfectly spherical.

The present invention seeks to overcome the problems of the prior art and to provide an alternative thereto.

The present invention provides a method of producing a smoking article incorporating a flavourant, wherein an ionic solution and a mixture, said mixture comprising a flavourant and carageenan, are intercontacted thus to effect a sol to gel transformation of the carageenan and thereby provide a stable flavour substance, said stable flavour substance thereafter being incorporated with smoking material and/or an outer wrapper of said smoking article such that said flavourant is released from said stable flavour substance under the influence of heat from the burning coal of said smoking article.

The present invention further provides a smoking article incorporating a stable flavour substance, which stable flavour substance comprises a flavourant trapped in carageenan obtainable in accordance with the above method and said stable flavour substance being incorporated in smoking materials and/or an outer wrapper of said smoking article.

The present invention yet further provides a foodstuff product incorporating a stable flavour substance, said stable flavour substance comprising a flavourant trapped in carageenan obtainable by intercontacting an ionic solution and a mixture, said mixture comprising a flavourant and carageenan, thus to effect a sol to gel transformation of said carageenan and thereby provide said stable flavour substance, and said stable flavour substance being such that said flavourant is released from said stable flavour substance upon cooking of said foodstuff product.

By carageenan (also known as carrageenan, carrageenin and carragheenin) we mean the carageenan gum extract of carageenan seaweed. Preferably the carageenan is substantially in the K-carageenan form. Carageenan derivatives may also be suitable.

Furthermore the carageenan, prior to the sol to gel transformation, preferably takes the form of a slurry. Preferably the carageenan slurry is an aqueous solution, and much by preference, comprises de-ionised water. The concentration of the carageenan in the slurry should be no more than 1% by weight.

The carageenan may be mixed with the flavourant before the carageenan is made into a sol, or the carageenan may be mixed with de-ionised water to form a sol before it is mixed with the flavourant. The flavourant may dissolve in the liquid of the sol or the flavourant may become suspended in the sol as an emulsion. The order of mixing of the carageenan and the flavourant relative to the addition of liquid and whether or not the flavourant will dissolve in the liquid of the sol may depend upon the nature of the flavourant.

The ionic solution is preferably an aqueous ionic solution, which aqueous ionic solution provides much by preference a source of potassium ions. Aqueous potassium chloride is a suitable aqueous ionic solution. Preferably, the aqueous ionic solution is a saturated solution.

Most flavour compounds, or mixtures thereof, except possibly protein flavours, are suitable for use in accordance with the method of the present invention. In the case of protein flavours, the highly charged nature of the protein flavourant molecules disrupts the gel formation of the carageenan. However, it may be possible to stabilise proteins as denatured proteins according to the above described inventive method. When used for tobacco products, essential oils, natural extracts and blended flavour formulations are particularly suitable flavourants. Particularly suitable for use in the tobacco industry are, for example, menthol, vanillin, benzaldehyde, cinamaldehyde, furaneol, herb oils, spice oils and citrus oils.

The stabilised flavourant of the present invention may take the form of a carageenan matrix throughout which the flavourant is dispersed. Alternatively, the stabilised flavourant may take the form of a volume of flavourant encapsulated in a casing of carageenan. The form of the stabilised flavourant will be determined by the method of production thereof.

In carrying out the inventive method, the carageenan/flavourant mixture may be added to the ionic solution dropwise. This method of addition may result in the formation of discrete particles of stabilised flavourant, each particle providing a carageenan matrix in which the flavourant is dispersed. As an alternative, the carageenan/ flavourant mixture can be injected into the ionic solution in a manner such that elongate particles in the form of strands of stabilised flavourant are produced.

More practically in industry, the mixture of carageenan and flavourant may be sprayed by means of an atomiser into the ionic solution. The particles of stabilised flavourant thus produced may be separated from the ionic solution by sedimentation or floatation. This method of addition may result in the formation of a free flowing powder.

Alternatively, the carageenan sol may be co-extruded with the flavourant into the ionic solution. A suitable method of co-extrusion is disclosed as "Centrifugal Extrusion Encapsulation" in the book entitled "Encapsulation and Controlled Release of Food Ingredients" by Risch and Reineccius, published by the American Chemical Society. In this case the stabilised flavourant may be produced as spherical particles of encapsulated flavourant.

A further alternative involves the addition of the ionic solution to the mixture of carageenan and flavourant. In this case, a monolithic body of carageenan gel forms with the flavourant dispersed throughout said body. The monolithic body may then be sliced and dried and then shredded in order to form shreds of stabilised flavourant.

Upon being produced, the stabilised flavourant produced may be dried in air. The particles of stabilised flavourant will be reduced in size upon drying owing to loss of water from the particles.

An advantage of the stabilised flavourant as formed in accordance with the inventive method lies in the fact that stabilised flavourant particles in the form of, for example, shreds, strands or spherical particles are stable at elevated temperatures, for example, up to 180°C. Furthermore, flavourant which is dispersed in the carageenan will generally not be released by subjecting the particles to elevated pressures or moisture.

As would be appreciated by a person skilled in the art, the thermal stability of the stabilised flavourant ensures that the flavourant will not be released under normal processing conditions. For example, when used in the tobacco industry, particles of stabilised flavourant can withstand the processing conditions of smoking material or smoking article production without the flavourant being released. However, at higher temperatures, for example, when the smoking article is smoked the carageenan structure will break up to release the flavourant.

A further advantage of the present invention is that a high level of flavourant may be stabilised per unit amount of carageenan.

In a case where the flavourant comprises a mixture of different types of flavourants, carageenan can stabilise the flavourant as a mixture of flavourants, rather than selectively stabilising certain types of flavourant from a mixture of different types of flavourants.

An example of a foodstuff product incorporating a stable flavour substance is burgers incorporating encapsulated onion oil.

Particles of stable flavourant may be added during the production of reconstituted tobacco (US 3,540,456 discloses a suitable method of producing reconstituted tobacco).

The following example is further illustrative of the present invention. The specific compounds and process parameters are presented as being typical, and various modifications can be derived in view of the foregoing disclosure.

### EXAMPLE 1

A 1% wt/wt sol of κ-carageenan was produced by adding the κ-carageenan to de-ionised water at about 20°C. Dill seed oil as a flavourant, was added to the aqueous κ-carageenan sol with stirring. The sol was added to a saturated solution of potassium chloride using a pasteur pipette. A sol to gel reaction took place on contact of the carageenan/flavourant mixture with the saturated solution of potassium chloride. Discrete particles were formed comprising a carageenan gel matrix in which the flavourant was dispersed.

The particles were skimmed off the surface of the potassium chloride solution and washed with 90% ethanol in water. The washed particles were then dried in air at room temperature, during which drying process the particles shrunk to about 25% of the original volume and became rigid.

## Claims

1. A method of producing a smoking article incorporating a flavourant, wherein an ionic solution and a mixture, said mixture comprising a flavourant and carageenan, are intercontacted thus to effect a sol to gel transformation of the carageenan and thereby provide a stable flavour substance, said stable flavour substance thereafter being incorporated with smoking material and/or an outer wrapper of said smoking article such that said flavourant is released from said stable flavour substance under the influence of heat from the burning coal of said smoking article.

2. A method according to Claim 1, wherein said carageenan is kappa-carageenan.

3. A method according to Claim 1 or 2, wherein said ionic solution is an aqueous ionic solution.

4. A method according to any one of the preceding claims, wherein said ionic solution provides a source of potassium ions.

5. A method according to Claim 4, wherein said ionic solution is potassium chloride solution.

6. A method according to any one of the preceding claims, wherein said mixture of flavourant and carageenan is added to said ionic solution.

7. A method according to any one of the preceding claims, wherein said mixture of flavourant and carageenan is intercontacted with said ionic solution by means of the spraying action of an atomiser.

8. A smoking article incorporating a stable flavour substance, which stable flavour substance comprises a flavourant trapped in carageenan obtainable by the process of Claim 1, and said stable flavour substance being incorporated in smoking material and/or an outer wrapper of said smoking article.

9. A foodstuff product incorporating a stable flavour substance, said stable flavour substance comprising a flavourant trapped in carageenan obtainable by intercontacting an ionic solution and a mixture, said mixture comprising a flavourant and carageenan, thus to effect a sol to gel transformation of said carageenan and thereby provide said stable flavour substance, and said stable flavour substance being such that said flavourant is released from said stable flavour substance upon cooking of said foodstuff product.

## Patentansprüche

1. Verfahren zur Herstellung eines rauchbaren Artikels, enthaltend einen Geschmacks-bzw. Flavorstoff, wobei eine Ionen-Lösung und ein Gemisch, das einen Flavorstoff und Carrageenan aufweist, miteinander in Kontakt gebracht werden, um so eine Sol-zu-Gel Umwandlung des Carragenans durchzuführen und dadurch eine stabile Flavor-Substanz zur Verfügung zu stellen, wobei die stabile Flavor-Substanz anschließend in rauchbares Material und/oder eine äußere Umhüllung des rauchbaren Artikels in der Weise eingebaut bzw. eingefügt wird, dass der Flavorstoff aus der stabilen Flavor-Substanz unter dem Einfluss der Wärme von der verbrennenden Kohle des rauchbaren Artikels freigegeben wird.

2. Verfahren nach Anspruch 1, wobei das Carragenan Kappa- bzw. K-Carragenan ist.

3. Verfahren nach Anspruch 1 oder 2, wobei die Ionen-Lösung eine wässrige Ionen-Lösung ist.

4. Verfahren nach einem der vorhergehenden Ansprüche, wobei die Ionen-Lösung eine Quelle für Kalium-Ionen zur Verfügung stellt.

5. Verfahren nach Anspruch 4, wobei die Ionen-Lösung eine Kaliumchlorid-Lösung ist.

6. Verfahren nach einem der vorhergehenden Ansprüche, wobei das Gemisch aus dem Flavorstoff und Carragenan zu der Ionen-Lösung hinzugefügt wird.

7. Verfahren nach einem der vorhergehenden Ansprüche, wobei das Gemisch aus Flavorstoff und Carragenan mit Hilfe der Sprühwirkung eines Zerstäubers in Kontakt mit der Ionen-Lösung gebracht wird.

8. Rauchbarer Artikel, enthaltend eine stabile Geschmacks- bzw. Flavor-Substanz, die einen Flavor- bzw. Geschmacksstoff aufweist, der in dem durch das Verfahren nach Anspruch 1 erzielbaren Carragenan eingefangen ist, wobei die stabile Flavor-Substanz in Rauchmaterial und/oder eine äußere Umhüllung des rauchbaren Artikels eingebaut bzw. eingefügt ist.

9. Nahrungsmittel-Produkt, enthaltend eine stabile Geschmacks- bzw. Flavor-Substanz, die einen in Carragenan eingefangenen Geschmacks- bzw. Flavorstoff aufweist, der durch in Kontaktbringen einer Ionen-Lösung und eines Gemisches erzielbar ist, das einen Flavorstoff und Carragenan aufweist, um so einen Sol-zu-Gel Umwandlung des Carragenans durchzuführen und dadurch eine stabile Geschmacks- bzw. Flavor-Substanz zur Verfügung zu stellen, und wobei die stabile Flavor-Substanz so ist, dass der Flavorstoff beim Kochen des Nahrungsmittel-Produktes aus der stabilen Flavor-Substanz freigegeben wird.

## Revendications

1. Procédé de production d'un article à fumer comportant un agent aromatisant, dans lequel une solution ionique et un mélange, ledit mélange comportant un agent aromatisant et de la carraghénine, sont mis en contact mutuel pour effectuer ainsi une transformation de la carraghénine de sol en gel et fournir ainsi une substance à flaveur stable, ladite substance à flaveur stable étant par la suite incorporée à du matériau à fumer et/ou une enveloppe extérieure dudit article à fumer de telle sorte que ledit agent aromatisant est libéré de ladite substance à flaveur stable sous l'influence de la chaleur provenant de la partie incandescente dudit article à fumer.

2. Procédé selon la revendication 1, dans lequel ladite carraghénine est du kappa-carraghénine.

3. Procédé selon la revendication 1 ou 2, dans lequel ladite solution ionique est une solution ionique aqueuse.

4. Procédé selon l'une quelconque des revendications précédentes, dans lequel ladite solution ionique fournit une source d'ions potassium.

5. Procédé selon la revendication 4, dans lequel ladite solution ionique est une solution de chlorure de potassium.

6. Procédé selon l'une quelconque des revendications précédentes, dans lequel ledit mélange d'agent aromatisant et de carraghénine est ajouté à ladite solution ionique.

7. Procédé selon l'une quelconque des revendications précédentes, dans lequel ledit mélange d'agent aromatisant et de carraghénine est mis en contact mutuel avec ladite solution ionique par l'action de pulvérisation d'un atomiseur.

8. Article à fumer incorporant une substance à flaveur stable, laquelle substance à flaveur stable comporte un agent aromatisant piégé dans de la carraghénine pouvant être obtenue par le procédé de la revendication 1, ladite substance à flaveur stable étant incorporée dans le matériau à fumer et/ou dans une enveloppe extérieure dudit article à fumer.

9. Produit alimentaire incorporant une substance à flaveur stable, ladite substance à flaveur stable comportant un agent aromatisant piégé dans de la carraghénine pouvant être obtenue par mise en contact mutuel d'une solution ionique et d'un mélange, ledit mélange comportant un agent aromatisant et de la carraghénine, pour effectuer ainsi une transformation de ladite carraghénine de sol en gel et ainsi fournir ladite substance à flaveur stable, et ladite substance à flaveur stable étant telle que ledit agent aromatisant est libéré de ladite substance à flaveur stable lors de la cuisson dudit produit alimentaire.
